# EUROPÄISCHE PATENTSCHRIFT

(11) **EP 3 371 102 B1**
(45) Veröffentlichungstag und Bekanntmachung des Hinweises auf die Patenterteilung: **28.07.2021**
(21) Anmeldenummer: 16791024.9
(22) Anmeldetag: 04.11.2016
(51) Int. Cl.: C01B 25/26, C01B 25/32, C02F 1/26, C05B 15/00, C05D 3/00, C05F 7/00, C02F 11/00, C02F 9/00, C02F 11/121, C02F 11/127, C02F 11/14, C05F 3/00

(54) **PHOSPHATGEWINNUNG AUS WERTSTOFFHALTIGEN ROHSTOFFEN**
OBTAINING PHOSPHATE FROM RAW MATERIALS CONTAINING VALUABLE SUBSTANCES
PRODUCTION DE PHOSPHATE À PARTIR DE MATIÈRES PREMIÈRES RENFERMANT UNE MATIÈRE DE VALEUR

(30) Priorität: 04.11.2015 DE 102015118900
(43) Veröffentlichungstag der Anmeldung: 12.09.2018
(73) Patentinhaber: REMONDIS Aqua GmbH & Co. KG, 44536 Lünen (DE)
(72) Erfinder: WISSEMBORSKI, Rüdiger, 55435 Gau-Algesheim (DE); SCHNEE, Rainer, 55130 Mainz (DE); OPITZ, Eva, 55452 Dorsheim (DE); GOTTSCHALL, Alexander, 55435 Gau-Algesheim (DE)
(74) Vertreter: Peters, Hajo
(86) Internationale Anmeldenummer: PCT/EP2016/076664
(87) Internationale Veröffentlichungsnummer: WO 2017/077030

(56) Entgegenhaltungen:
- WO-A1-2012/059464
- DE-A1-102009 020 745
- US-A- 3 511 599
- US-A1- 2012 006 742

## Beschreibung

### GEGENSTAND DER ERFINDUNG

Die vorliegende Erfindung betrifft ein Verfahren zur Gewinnung von Phosphat aus wertstoffhaltigem Rohstoff durch Extraktion einer Suspension des wertstoffhaltigen Rohstoffes mit einem Extraktionsmittel.

Wertstoffhaltige Rohstoffe im Sinne der vorliegenden Erfindung sind solche, die extrahierbaren Phosphor oder extrahierbare Phosphate enthalten und umfassen Klärschlamm, Klärschlammasche, Klärschlammschlacke, Gärreste, Rückstände aus der Vergärung von Biomasse, Wirtschaftsdünger, Gülle, Tierfett, Tiermehl, Tiermehlaschen, Fleischknochenmehle, Bioabfälle, Gartenabfälle, Bonderschlämme, phosphathaltige technischen Abfalllösungen, phosphathaltige Abwässer, Nebenprodukte der Lebensmittelherstellung, einschließlich Casein, Käsestaub, Fleisch- und Fischabfälle, bei der Herstellung von Speiseöl verbleibende Presskuchen, sollen aber darauf nicht beschränkt sein.

### HINTERGRUND DER ERFINDUNG

Die Gewinnung von Phosphor bzw. Phosphaten aus wertstoffhaltigen Rohstoffen ist aus verschiedenen Gründen von wirtschaftlicher Bedeutung.

Ein erster Gesichtspunkt ist die Gewinnung von Phosphor bzw. Phosphaten vor dem Hintergrund der begrenzten weltweiten Reserven an Phosphor, auf die mit den heutigen Abbaubedingungen zurückgegriffen werden kann, sowie des Preisanstiegs von Rohphosphaten und der Prognosen über einen unter Berücksichtigung des Bevölkerungswachstums und zukünftige Ernährungsgewohnheiten steigenden Verbrauch. Es werden daher zunehmend neue Maßnahmen zur Gewinnung und Rückgewinnung von Phosphaten aus anderen Quellen diskutiert.

Ein weiterer Gesichtspunkt ist die Abreicherung von Phosphaten aus wertstoffhaltigen Rohstoffen, die neben Phosphaten eine Reihe von weiteren Pflanzennährstoffen enthalten und zur Pflanzendüngung eingesetzt werden. Häufig enthalten solche Rohstoffe im Verhältnis zu anderen Pflanzennährstoffen sehr hohe Konzentrationen an Phosphaten. Werden solche Rohstoffe in Mengen zur Pflanzendüngung ausgebracht, mit denen die übrigen Pflanzennährstoffe den Pflanzen in ausreichenden Konzentrationen zugeführt werden, besteht aufgrund der hohen Phosphatkonzentrationen die Gefahr einer Oberdüngung mit Phosphaten. Um solche Rohstoffe zur Ausbringung als Pflanzendünger herzurichten, ist daher eine vorherige Abreicherung des Phosphats erforderlich.

Eine geeignete und bereits genutzte Rohstoffquelle für die Phosphatgewinnung einerseits und die Pflanzendüngung andererseits ist beispielsweise Klärschlamm aus der Abwasserbehandlung, einschließlich Klärschlammasche und Klärschlammschlacke. Klärschlamm enthalt eine Reihe von Pflanzennährstoffen, wie Stickstoff, Phosphor und Kalium, weshalb Verfahren entwickelt wurden, den Klärschlamm als landwirtschaftlichen Pflanzendünger aufzubereiten und ihn so in den Kreis-lauf zurückzuführen. Andererseits wird Klärschlamm wegen seiner hohen Schmermetall- und Giftstoffbelastung als Danger auch kritisch betrachtet und sogar als Sonderabfall behandelt. In einigen Landern wurde die landwirtschaftliche Klärschlammverwertung daher bereits eingeschränkt oder gänzlich gestoppt.

Andere phosphathaltige Rohstoffe für eine Phosphatgewinnung und/oder Pflanzendüngung sind beispielsweise Gärreste, Rückstande aus der Vergärung von Biomasse, Wirtschaftsdünger, Gülle, Tierfett, Tiermehl, Tiermehlaschen, Fleischknochenmehle, Bioabfalle, Gartenabfalle, Bonderschlämme, phosphathaltige technische Abfalllösungen und phosphathaltige Abwasser.

Bei der Monoverbrennung von Klärschlamm bleibt Phosphor als Rückstand in der Asche. Je nach Betriebsweise der Kläranlage betragt die Konzentration zwischen 4 bis 8 Gew.-% P, bzw. 10 bis 22 Gew.-% Phosphorpentoxid (P₂O₅). Weitere Hauptkomponenten der Klärschlammasche sind SiO₂ (30-50 %), CaO (ca. 10-20 %) sowie Al₂O₃ und Fe₂O₃. Daneben enthalt die Klärschlammasche Schwermetalle, u.a. Cr (50ppm), Cu (350 ppm), Ni (30 ppm), Pb (10,0ppm), Cd (1,3ppm), Hg (1,45 ppm). Organische Schadstoffe werden durch die Verbrennung des Klärschlamms in der Re-gel restlos zerstört, und Keime sowie geruchsbildende Stoffe werden durch die Verbrennung eliminiert.

Verschiedene Verfahren für die Nutzung bzw. Gewinnung von Phosphor aus Klärschlamm und Klärschlammasche sind im Stand der Technik bekannt und beispielsweise in der DE 10 2009 020 745 A1 zusammenfassend beschrieben. Die DE 10 2009 020 745 selbst betrifft ein Verfahren zur Gewinnung von Wertstoffen, insbesondere Phosphat, aus Klärschlammprodukten durch Extraktion einer wässrigen, alkoholischen oder wässrig-alkoholischen Suspension des Klärschlammproduktes mit gasförmigem oder überkritischem Kohlendioxid.

Neben der oben genannten DE 10 2009 020 745 A1 beschäftigt sich die US 2012/006742 mit der Behandlung von Abwässern zur Entfernung oder Veränderung von dort enthaltenen Chemikalien oder Schwermetallen vor der Abwasser-Weiterbehandlung.

Die Aufgabe der vorliegenden Erfindung bestand in der Bereitstellung eines wirtschaftlichen Verfahrens zur Abreicherung und/oder Rückgewinnung von Phosphaten aus wertstoffhaltigen Rohstoffen mit gegenüber bekannten Verfahren hohen bzw. höheren Ausbeuten.

### BESCHREIBUNG DER ERFINDUNG

Gelöst wird diese Aufgabe durch ein Verfahren zur Gewinnung von Phosphat aus wertstoffhaltigem Rohstoff, ausgewählt aus der Gruppe, bestehend aus Klärschlamm, Klärschlammasche, Klärschlammschlacke, Garresten, Rückstanden aus der Vergärung von Biomasse, Wirtschaftsdünger, Gülle, Tierfett, Tiermehl, Tiermehlaschen, Fleischknochenmehlen, Bioabfallen, Gartenabfallen, Bonderschlämmen, phosphathaltigen technischen Abfalllösungen, phosphathaltigen Abwässer, Nebenprodukte von Lebensmittelherstellung, einschließlich Casein, Käsestaub, Fleisch- und

Fischabfalle, bei der Herstellung von Speiseöl verbleibende Presskuchen, und Gemischen davon, durch Extraktion, bei dem man
(a) den wertstoffhaltigen Rohstoff in Form einer Suspension bereitstellt oder eine Suspension des wertstoffhaltigen Rohstoffes in einem Suspendiermittel, ausgewählt aus der Gruppe, bestehend aus Wasser, Alkohol, Wasser/Alkohol-Gemisch oder wässriger Lösung, bereitstellt,
(b) Extraktionsmittel in die Suspension aus Stufe a) einleitet, wobei das Extraktionsmittel eine Kombination aus Kohlendioxid (CO₂) und Schwefeldioxid (SO₂) ist,
   wobei unterschiedliche Verbindungen des Extraktionsmittels gleichzeitig oder nacheinander in die Suspension eingeleitet werden, bis der pH-Wert der Suspension kleiner oder gleich 3,5 beträgt,
(c) ungelöste Feststoffe aus der Suspension abtrennt, wobei eine Flüssigkeit erhalten wird, und
(d) aus der in Stufe c) erhaltenen Flüssigkeit darin gelöste Phosphate ausfällt und von der Flüssigkeit abtrennt.

Das Extraktionsmittel einer Kombination von Kohlendioxid (CO₂) und Schwefeldioxid (SO₂) hat sich als besonders geeignet erwiesen. Es hat sich überraschend gezeigt, dass bei Verwendung einer Kombination von Kohlendioxid (CO₂) und Schwefeldioxid (SO₂) als Extraktionsmittel deutlich höhere Phosphatausbeuten erzielt werden können als bei einer Extraktion mit gasförmigem oder Oberkritischem Kohlendioxid alleine, wie es aus der DE 10 2009 020 745 bekannt ist.

Vorzugsweise handelt es sich bei dem Kohlendioxid (CO₂) um gasförmiges Kohlendioxid. Dieses liegt somit nicht in Oberkritischer Form vor.

Wird Schwefeldioxid (SO₂) in wässrige Lösung oder Suspension eingeleitet, so bildet sich schweflige Saure (H₂SO₃), die unter anderem eine Absenkung des pH-Wertes der Lösung oder Suspension bewirkt. Es hat sich dabei gezeigt, dass das Einleiten von Schwefeldioxidgas (SO₂) das Aufschließen des wertstoffhaltigen Rohstoffs, insbesondere der darin enthaltenen Biomasse, und die Freisetzung von Phosphaten verbessert. Der technische Effekt der Verwendung von Schwefeldioxid (SO₂), vorzugsweise in Kombination mit Kohlendioxid (CO₂) war somit überraschend.

In einer bevorzugten Ausführungsform des erfindungsgemäßen Verfahrens wird Schwefeldioxid (SO₂) zusätzlich zu Kohlendioxid (CO₂) in die Suspension eingeleitet, bis der pH-Wert der Suspension kleiner oder gleich 3,5, vorzugsweise kleiner oder gleich 3,0 betragt. Es hat sich überraschend gezeigt, dass der beobachtete technische Effekt der erhöhten Phosphatausbeute bei Einleitung von Schwefeldioxidgas (SO₂) in die Suspension bei einem pH-Wert kleiner oder gleich 3,5 stark ansteigt. Es wird angenommen, dass bei diesem pH-Wert eine Konzentration an SO₂ und/oder daraus gebildeter schwefliger Saure in der Suspension erreicht ist, bei der ein Aufschließen des wertstoffhaltigen Rohstoffs, insbesondere der darin enthaltenen Biomasse, und die resultierende Freisetzung von Phosphaten besonders effektiv abläuft-

Wahrend Kohlendioxid (CO₂) aufgrund seiner physikalischen Eigenschaften in gasförmigem Zustand eingeleitet wird, kann ein Einleiten von SO₂ sowohl in Form eines Gases als auch als Flüssigkeit erfolgen, da dieses auch bei Normaldruck (1,013 bar) und Normaltemperatur (20 °C) zumindest kurzzeitig im Wesentlichen als Flüssigkeit vorliegen kann.

NOx umfassen im Wesentlichen NO, NO₂, N₂O, N₂O₄ und N₂O₅. NOₓ ist meist ausgewählt aus der Gruppe, bestehend aus NO, NO₂, N₂O, N₂O₄ und N₂O₆ sowie Gemischen davon.

Vorzugsweise beträgt der Gewichtsanteil von eingeleitetem CO₂ als Bestandteil eines Extraktsionsmittels 0,0001 Gew.-% bis 10 Gew.-% bezogen auf das Gesamtgewicht der Suspension in Stufe a).

Dies umfasst, dass bei einem Extraktionsmittel, das aus SO₂ und CO₂ besteht, die Menge an eingeleitetem SO₂ 0,0001 Gew.-% bis 10 Gew.-% bezogen auf das Gesamtgewicht der Suspension in Stufe a) betragt und/oder die Menge an eingeleitetem CO₂ 0,0001 Gew.-% bis 10 Gew.-% bezogen auf das Gesamtgewicht der Suspension in Stufe a) betragt.

In einer Ausführungsform leitet man das Extraktionsmittel oder, bei sukzessiver Einleitung der Bestandteile des Extraktionsmittel, wenigstens einen Bestandteil des Extraktionsmittels in die wässrige Suspension des wertstoffhaltigen Rohstoffes ein, und erzeugt dadurch einen Überdruck von 0,1 bis 200 bar, vorzugsweise von 1 bis 100 bar, besonders bevorzugt von 5 bis 20 bar, bezogen auf den Umgebungsdruck. Es versteht sich, dass in einem Gefäß, in dem sich die Suspension befindet und in das Extraktionsmittel eingeleitet wird/werden, vor dem Einleiten im Wesentlichen Umgebungsdruck herrscht und das Gefäß neben der Suspension im Wesentlichen Luft beinhaltet. An die Luft werden keine besonderen Anforderungen gestellt und sie entspricht im Wesentlichen der das Gefäß umgebenden Luft.

Der Umgebungsdruck bezieht sich dabei auf den am Ort der Verfahrensdurchführung herrschenden Luftdruck, der sich beispielsweise in einem Bereich von etwa 1,07 bar (ca. 400 m unter Meeresspiegel) und 0,7 bar (ca. 2800 m Ober Meeresspiegel) bewegt.

Ein Vorteil der Einleitung des Extraktionsmittels zur Erzeugung eines Überdrucks besteht darin, dass dadurch ein größerer Anteil des Extraktionsmittels in der Suspension gelöst wird und zu einer Absenkung des pH-Wertes und gegebenenfalls Aufschluss von Biomasse beitragt.

In einer Ausführungsform leitet man das Extraktionsmittel, das CO₂ enthält, in die wässrige Suspension des wertstoffhaltigen Lösungsmittels ein, und erzeugt dadurch einen Überdruck von 0,1 bis 200 bar, vorzugsweise von 1 bis 100 bar, besonders bevorzugt von 5 bis 20 bar, bezogen auf den Umgebungsdruck. Anschließend wird vorzugsweise der für das Einleiten von CO₂ angelegte Überdruck im Wesentlichen beibehalten, bevorzugt zumindest so lange, bis alle weiteren Bestandteile des Extraktionsmittels eingeleitet sind.

In einer Ausführungsform senkt man nach Stufe b) und vor Stufe c) in einer Zwischenstufe und/oder nach Stufe c) den Druck ab, wobei in Stufe b) eingeleitetes Extraktionsmittel zumindest teilweise in Form von Gas(en) aus der Suspension ausgetrieben wird. Vorzugsweise erfolgt das Absenken des Drucks auf Umgebungsdruck.

Ein Vorteil der in Kombination verwendeten Bestandteile des Extraktionsmittels, nämlich SO₂ und CO₂, besteht darin, dass sie durch Aufbauen bzw. Halten eines Überdrucks beim Einleiten und anschließendes Absenken des Druckes zumindest teilweise wieder aus der zu behandelnden Suspension entfernbar sind. Die Bestandteile des Extraktionsmittels entweichen dabei gasförmig und werden in einer Ausführungsform als Gase wieder aufgefangen und erneut in dem gleichen Ver-fahren oder in einem anderen Verfahren eingesetzt.

Sofern ein Absenken des Druckes vor Stufe c) in einer Zwischenstufe zwischen Stufe b) und Stufe c) erfolgt, versteht es sich, dass sich Stufe c) unmittelbar anschließt, da anderenfalls in Stufe c) zusätzlich zu den Feststoffen auch durch das Entweichen von Extraktionsmittel gefällte Phosphate von der Flüssigkeit abgetrennt werden. Unmittelbar anschließend bedeutet, dass eine Lagerung der Suspension bei Umgebungsdruck nur für wenige Minuten, vorzugsweise weniger als 10 Minuten, besonders bevorzugt weniger als 5 Minuten erfolgt und besonders bevorzugt eine Druckentlastung auf Umgebungsdruck erst unmittelbar während des Einbringens der Suspension in ein zur Abtrennung der Feststoffe vorgesehenes Gefäß erfolgt, z.B. während des Einbringens in einen Filter oder eine Zentrifuge.

In einer Ausführungsform fallt man die Phosphate in Stufe d) aus, indem man den Druck reduziert und/oder eine alkalische Komponente zugibt und/oder die Temperatur erhöht und/oder die Flüssigkeit aus Stufe c) mit mechanischen Gasextraktionshilfsmitteln, Ultraschall und/oder Mikrowellen, insbesondere durch Ruhren, behandelt, wobei in Stufe b) eingeleitetes Extraktionsmittel zumindest teilweise in Form von Gas(en) aus der Flüssigkeit ausgetrieben wird. Grundsätzlich sind derartige Maßnahmen für das Ausfallen von Phosphaten aus einer zuvor angesäuerten Lösung, in der die Phosphate in Lösung vorliegen, bekannt. Ein Vorteil der vorliegenden Erfindung besteht jedoch darin, dass das Extraktionsmittel in Form von Gas(en) dabei aus der Flüssigkeit ausgetrieben wird, ohne eine chemische Modifikation zu erfahren und somit unmittelbar wieder eingesetzt werden kann. Dabei erfolgt in einer Ausführungsform eine Rückgewinnung der Extraktionsmittel. Es hat sich gezeigt, dass insbesondere bei einer Verwendung einer Kombination von SO₂ und CO₂ als Extraktionsmittel ein synergistischer Effekt beim Austreiben der Extraktionsmittel auftritt, d.h. dass die Rückgewinnbarkeit der Extraktionsmittel in Kombination deutlich verbessert wird im Vergleich zu einem einzigen eingesetzten Extraktionsmittel.

Es versteht sich, dass eine Reduktion des Druckes einerseits die zuvor beschriebene Absenkung nach Stufe c), vorzugsweise auf Umgebungsdruck umfasst. In anderen Ausführungsformen umfasst die Reduktion des Druckes auch das Anlegen eines Unterdrucks, wobei absolute Drucke von hinunter bis zu 0,1 bar umfasst sind.

Einer Erhöhung der Temperatur erfolgt vorzugsweise um 5 °C bis 50 °C im Vergleich zu der vorherigen Temperatur der Suspension, besonders bevorzugt um 10 ° C bis 30 °C.

Eine Anhebung des pH-Wertes durch Zugabe einer alkalischen Komponente, d.h. einer Komponente mit einem pH > 7, bevorzugt einer wässrigen Lösung oder Suspension mit einem pH > 7, erfolgt vorzugsweise um mindestens eine pH-Stufe. Bevorzugte pH-Werte, die durch Zugabe einer alkalischen Komponente erhalten werden, liegen im Bereich von pH 7 bis pH 14, vorzugsweise pH 8 bis pH 11. Für das Anheben des pH-Wertes bevorzugte alkalische Komponenten umfassen wässrige Suspensionen von Ca(OH)₂ (Kalkmilch).

Vorzugsweise wird das in Form von Gas(en) ausgetriebene Extraktionsmittel aufgefangen und erneut in einem Verfahren zur Rückgewinnung von Phosphat, wie oben beschrieben, in Stufe b) als Extraktionsmittel oder Bestandteil eines Extraktionsmittels eingeleitet. Optional erfolgt eine Gastrennung vor erneuter Einleitung als Extraktionsmittel oder Bestandteil eines Extraktionsmittels.

Es versteht sich, dass ein aufgefangenes Gasgemisch, das Komponenten des Extraktionsmittels umfasst bzw. daraus besteht, unmittelbar als Extraktionsmittel wieder eingesetzt werden kann. Dem Fachmann sind jedoch auch Verfahren und Vorrichtungen zur Gastrennung bekannt, einschließlich Membranverfahren, Gaszentrifugen oder Gaschromatographen zur Auftrennung des Gasgemisches, so dass die rückgewonnenen Bestandteile des Extraktionsmittels auch als Einzelverbindungen zurückgewonnen und erneut nacheinander eingeleitet werden können.

Es versteht sich auch, dass dies umfasst, dass in bestimmten Ausführungsformen nach der Rückgewinnung das aufgefangene Gas mit neuem Schwefeldioxid (SO₂) und/oder Kohlendioxid (CO₂) ergänzt wird, um als Extraktionsmittel in dem Verfahren erneut eingesetzt zu werden.

Vorzugsweise erfolgt das Einleiten des Extraktionsmittels in Stufe b) in die Suspension bei einer Temperatur im Bereich von -20 bis 200° C, vorzugweise 0 bis 100° C, besonders bevorzugt von 10 bis 50° C.

Bevorzugt enthalt das Suspendiermittel einen oder mehrere Alkohole in einer Menge von 0,1 bis 50 Gew.-%, vorzugsweise 1 bis 10 Gew.-%, besonders bevorzugt 1 bis 5 Gew.-%, bezogen auf die Menge an flüssigem Suspendiermittel, wobei der eine Alkohol oder die mehreren Alkohole vorzugsweise ausgewählt ist/sind unter Methanol, Ethanol und Isopropanol. Derartige Suspendiermittel haben sich als besonders vorteilhaft für die Suspension von wertstoffhaltigen Rohstoffen erwiesen, bei denen eine Rückgewinnung von Phosphat gewünscht ist.

In einer Ausführungsform enthält die Suspension den wertstoffhaltigen Rohstoff in einer Menge von 0,01 bis 10 Gew.-%, bezogen auf die Suspension.

In einer Ausführungsform weist die in Stufe a) bereitgestellte Suspension einen Feststoffgehalt im Bereich von 0,01 Gew.-% bis 10 Gew.-%, vorzugsweise 0,1 Gew.-% bis 5 Gew.-%, bezogen auf das Gesamtgewicht der Suspension auf.

In einer Ausführungsform wird das Abtrennen ungelöster Feststoffe in Stufe c) mittels Filtration, Sedimentation oder Zentrifugation durchgeführt.

Weitere Vorteile, Merkmale und Anwendungsmöglichkeiten der vorliegenden Erfindung werden deutlich anhand der folgenden Beschreibung bevorzugter Ausführungsformen.

### BEISPIELE

### Beispiel 1

In einen Extraktionsbehälter mit einem Volumen von 50 Liter wurde Klärschlamm aus einer kommunalen Klärschlammanlage in Wasser in einer Menge suspendiert, dass der Feststoffgehalt der Suspension 0,5 Gew.-% betrug. Es wurden 25 Liter des so verdünnten Klärschlamms, d.h. der Suspension, erhalten. Der zuvor bestimmte Phosphatgehalt des Klärschlamms betrug 7,5 Gew.-%, ausgedrückt als Gehalt P₂O₅ und bezogen auf das Gewicht des Feststoffs (Trockenmasse) des Klärschlamms. Die Temperatur der Suspension betrug während des gesamten Vorgangs 21 °C.

Als Extraktionsmittel wurden konstante Mengen an Kohlendioxidgas (CO₂) und variierende Mengen Schwefeldioxidgas (SO₂) eingesetzt. Ein Vergleichsversuch wurde ohne Schwefeldioxidgas (SO₂) durchgeführt. In einem weiteren Versuch wurde nur Schwefeldioxidgas (SO₂), aber kein Kohlendioxidgas (CO₂) eingesetzt. Sofern als Extraktionsmittel die Kombination aus Kohlendioxidgas (CO₂) und Schwefeldioxidgas (SO₂) eingesetzt wurde, erfolgte zuerst die Einleitung von Kohlendioxidgas (CO₂) für einen vorgegebenen Zeitraum von 30 min und einer Durchflussmenge von 2 m³/h (gemessen bei Umgebungsdruck) in ein System, das zuvor Umgebungsdruck aufwies und Umgebungsluft beinhaltete, wobei ein Druck von 10 bar, d.h. ein Überdruck von ca. 9 bar, erzeugt wurde. Anschließend erfolgte die Einleitung von Schwefeldioxid (SO₂), das unmittelbar aus einem Druckbehälter entnommen wurde und sich noch nicht verflüchtigt hatte, so dass es beim Einleiten als Flüssigkeit vorlag.

Nach der Einleitung von Kohlendioxidgas (CO₂) und Schwefeldioxid (SO₂) in die Suspension wurde jeweils der pH-Wert der Suspension gemessen. Nach Abschluss der Einleitung der Extraktionsmittel erfolgte eine Druckentspannung, d.h. der Druck wurde dem Umgebungsdruck angepasst und es wurden ungelöste Feststoffe abfiltriert. Aufgrund des unmittelbar nach Druckentspannung durchgeführten Filtrierens erfolgte noch keine Ausfällung von Phosphaten vor dem Filtrieren. In dem von Feststoffen befreiten Filtrat wurde der Phosphatgehalt bestimmt (angegeben als Gehalt von P₂O₅ im gesamten Filtrat).

Sowohl bei der Druckentspannung als auch bei der Zugabe von Kalkmilch entwich ein Gasgemisch aus der Suspension bzw. dem Filtrat, das auffangbar war und sowohl CO₂ als auch SO₂ enthielt.

Tabelle 1 zeigt die eingesetzten Mengen von SO₂ in dem Extraktionsmittel, wobei SO₂ mit einer Reinheit von 99,98 Gew.-% verwendet wurde, sowie den Phosphatgehalt in der Klärschlamm-Trockenmasse (P₂O₅ im Klärschlamm). Weiter sind der pH-Wert nach der Einleitung der einzelnen Bestandteile des Extraktionsmittels (CO₂ und SO₂), der im Filtrat gemessene Phosphatgehalt und die Ausbeute an Phosphat im Filtrat, bezogen auf den Gehalt in der Klärschlamm-Trockenmasse, angegeben.

**Tabelle 1**

| **Versuch Nr.** | **P₂O₅ im Klärschlamm [Gew.-%]** | **CO₂** | **SO₂ [g]** | **pH-Wert nach CO₂**-**Einleitung** | **pH-Wert nach SO₂**-**Zugabe** | **P₂O₅ im Filtrat [mg/l]** | **Phosphatausbeute [Gew.-%]** |
|---|---|---|---|---|---|---|---|
| **1.1** | 7,5 | + | 0 | ca. 5,5 | x | 70-80 | 18-21 |
| **1.2** | 7,5 | + | 5 | 5,01 | 6,38 | 70 | 18,67 |
| **1.3** | 7 | + | 10 | 5,13 | 5,63 | 80 | 22,86 |
| **1.4** | 7 | + | 20 | 3,91 | 3,3 | 200 | 57,14 |
| **1.5** | 7,5 | + | 110 | 2,13 | 2,09 | 250 | 66,67 |
| **1.6** | 7,5 | - | 20 | - | 3,15 | 185 | 48 |

### Beispiel 2

Die Durchführung der Versuche erfolgte wie oben in Beispiel 1 beschrieben, allerdings wurde in unterschiedlichen Versuchen eine Menge von SO₂ eingesetzt, die 5 g, 12 g beziehungsweise 20 g betrug. Die in allen Versuchen in Beispiel 2 eingesetzte Menge an CO₂ war 12 g. Wie in Beispiel 1 wurde als Vergleich ein Versuch ohne SO₂ durchgeführt, bei dem jedoch eine Extraktion mit CO₂ alleine erfolgte.

In allen Versuchen in Beispiel 2 wurde derselbe Klärschlamm als Ausgangsmaterial verwendet. Dieser enthielt 7,5 Gew.-% P₂O₅ in der Trockenmasse und die eingesetzte Suspension wies einen Feststoffgehalt von 0,5 Gew.-% auf. Die für die Versuche eingesetzte Menge an Suspension waren jeweils 25 Liter.

Des Weiteren wurde das von Feststoffen befreite Filtrat mit einer Ca(OH)₂-Suspension (Kalkmilch) versetzt bis zu einer Ca(OH)₂-Konzentration des Filtrats von 0,5 Gew.-%. Der nach der Ca(OH)₂-Zugabe gefällte Niederschlag wurde abfiltriert und analysiert.

Die Ergebnisse der Analyse des mit Kalkmilch gefällten Niederschlags sowie die im Extraktionsmittel jeweils eingesetzten Mengen an SO₂ sind in der nachfolgenden Tabelle 2 wiedergegeben.

**Tabelle 2**

| **Versuch Nr.** | **2.1** | **2.2** | **2.3** | **2.4** |
|---|---|---|---|---|
| **SO₂ [g]** | **5** | **12** | **20** | **0** |
| **Na₂O Gew.-%** | < 0,1 | < 0,1 | < 0,1 | < 0,10 |
| **MgO Gew.-%** | 0,6 | 0,4 | 0,1 | 0,58 |
| **Al₂O₃ Gew.-%** | 0,4 | 0,4 | 0,5 | 0,45 |
| **SiO₂ Gew.-%** | 3,1 | 3,9 | 1 | 3,49 |
| **P₂O₅ Gew.-%** | 22,8 | 22,6 | 27,5 | 20,24 |
| **SO₃ Gew.-%** | 1,8 | 2,2 | 2 | 0,53 |
| **K₂O Gew.-%** | 0,3 | 0,4 | 0,3 | 0,33 |
| **CaO Gew.-%** | 18,2 | 7,4 | 1,6 | 19,11 |
| **TiO₂ Gew.-%** | <0,1 | <0,10 | <0,10 | < 0,1 |
| **MnO Gew.-%** | < 0,1 | < 0,1 | < 0,1 | < 0,1 |
| **Fe₂O₃ Gew.-%** | 19,9 | 28,7 | 36,3 | 18,79 |
| **CuO Gew.-%** | <0,1 | <0,1 | <0,1 | < 0,1 |
| **ZnO Gew.-%** | <0,1 | <0,1 | <0,1 | < 0,1 |

Anhand der Beispiele ist deutlich erkennbar, dass bei der Lösung von Phosphat im Filtrat mit einer Kombination aus Kohlenstoffdioxid und Schwefeldioxid eine höhere Phosphatausbeute erhalten wird als bei Verwendung nur einer der Bestandteile als Extraktionsmittel. Dies trifft auch auf die abschließende Rückgewinnung von Phosphat nach der Fällung zu.

## Patentansprüche

1. Verfahren zur Gewinnung von Phosphat aus wertstoffhaltigem Rohstoff, ausgewählt aus der Gruppe, bestehend aus Klärschlamm, Klärschlammasche, Klärschlammschlacke, Gärresten, Rückstanden aus der Vergärung von Biomasse, Wirtschaftsdünger, Gülle, Tierfett, Tiermehl, Tiermehlaschen, Fleischknochenmehlen, Bioabfällen, Gartenabfällen, Bonderschlämmen, phosphathaltigen technischen Abfalllösungen, phosphathaltigen Abwässern, Nebenprodukten von Lebensmittelherstellung, einschließlich Casein, Käsestaub, Fleisch-und Fischabfälle und bei der Herstellung von Speiseöl verbleibende Presskuchen, und Gemischen davon, durch Extraktion, bei dem man
(a) den wertstoffhaltigen Rohstoff in Form einer Suspension bereitstellt oder eine Suspension des wertstoffhaltigen Rohstoffes in einem Suspendiermittel, ausgewählt aus der Gruppe, bestehend aus Wasser, Alkohol, Wasser/AlkoholGemisch oder wässriger Lösung, bereitstellt,
(b) Extraktionsmittel in die Suspension aus Stufe a) einleitet, wobei das Extraktionsmittel eine Kombination aus Kohlendioxid (CO₂) und Schwefeldioxid (SO₂) ist, wobei unterschiedliche Verbindungen des Extraktionsmittels gleichzeitig oder nacheinander in die Suspension eingeleitet werden, bis der pH-Wert der Suspension kleiner oder gleich 3,5 beträgt,
(c) ungelöste Feststoffe aus der Suspension abtrennt, wobei eine Flüssigkeit erhalten wird, und
(d) aus der in Stufe c) erhaltenen Flüssigkeit darin gelöste Phosphate ausfällt und von der Flüssigkeit abtrennt.

2. Verfahren nach Anspruch 1, **dadurch gekennzeichnet, dass** der Gewichtsanteil des CO₂, das als Bestandteil des Extraktionsmittels in Stufe b) eingeleitet wird, 0,0001 Gew.-% bis 10 Gew.-% bezogen auf das Gesamtgewicht der Suspension in Stufe a) beträgt.

3. Verfahren nach einem der vorangegangenen Ansprüche, **dadurch gekennzeichnet, dass** man das Extraktionsmittel oder, bei sukzessiver Einleitung der Bestandteile des Extraktionsmittels, wenigstens einen Bestandteil des Extraktionsmittels in die wässrige Suspension des wertstoffhaltigen Rohstoffes einleitet, und dadurch einen Überdruck von 0,1 bis 200 bar, vorzugsweise von 1 bis 100 bar, besonders bevorzugt von 5 bis 20 bar, bezogen auf den Umgebungsdruck erzeugt.

4. Verfahren nach Anspruch 3, **dadurch gekennzeichnet, dass** man wenigstens das Extraktionsmittel, das CO₂ enthält, in die wässrige Suspension des wertstoffhaltigen Rohstoffes einleitet, und dadurch einen Überdruck von 0,1 bis 200 bar, vorzugsweise von 1 bis 100 bar, besonders bevorzugt von 5 bis 20 bar, bezogen auf den Umgebungsdruck erzeugt.

5. Verfahren nach Anspruch 3 oder 4, **dadurch gekennzeichnet, dass** man nach Stufe b) und vor Stufe c) in einer Zwischenstufe und/oder nach Stufe c) den Druck absenkt, wobei in Stufe b) eingeleitetes Extraktionsmittel zumindest teilweise in Form von Gas(en) aus der Suspension ausgetrieben wird.

6. Verfahren nach einem der vorangehenden Ansprüche, **dadurch gekennzeichnet, dass** man in Stufe d) Phosphate ausfällt, indem man (i) den Druck reduziert und/oder (ii) eine alkalische Komponente zugibt und/oder (iii) die Temperatur erhöht und/oder (iv) die Flüssigkeit aus Stufe c) mit mechanischen Gasextraktionshilfsmitteln, Ultraschall und/oder Mikrowellen, insbesondere durch Rühren, behandelt, wobei in Stufe b) eingeleitetes Extraktionsmittel zumindest teilweise in Form von Gas(en) aus der Flüssigkeit ausgetrieben wird.

7. Verfahren nach Anspruch 6, **dadurch gekennzeichnet, dass** die alkalische Komponente eine wässrige Suspension von Ca(OH)₂ ist.

8. Verfahren nach einem der Ansprüche 5, 6 oder 7, **dadurch gekennzeichnet, dass** das in Form von Gas(en) ausgetriebene Extraktionsmittel aufgefangen und erneut in einem Verfahren gemäß einem der vorangehenden Ansprüche in Stufe b) als Extraktionsmittel oder Bestandteil eines Extraktionsmittels eingeleitet wird.

9. Verfahren nach einem der vorangegangenen Ansprüche, **dadurch gekennzeichnet, dass** die Suspension beim Einleiten des Extraktionsmittels eine Temperatur im Bereich von -20 bis +200 °C, vorzugsweise von 0 bis +100 °C, besonders bevorzugt von 10 bis +50 °C aufweist.

10. Verfahren nach einem der vorangegangenen Ansprüche, **dadurch gekennzeichnet, dass** das Suspendiermittel einen oder mehrere Alkohole in einer Menge von 0,1 bis 50 Gew.-%, vorzugsweise 1 bis 10 Gew.-%, besonders bevorzugt 1 bis 5 Gew.-%, enthält, bezogen auf die Menge an flüssigem Suspendiermittel, wobei der eine Alkohol oder die mehreren Alkohole vorzugsweise ausgewählt ist/sind unter Methanol, Ethanol und Isopropanol.

11. Verfahren nach einem der vorangegangenen Ansprüche, **dadurch gekennzeichnet, dass** die Suspension den wertstoffhaltigen Rohstoff in einer Menge von 0,01 bis 10 Gew.-%, enthalt, bezogen auf die Suspension.

12. Verfahren nach einem der vorangehenden Ansprüche, **dadurch gekennzeichnet, dass** die in Stufe a) bereitgestellte Suspension einen Feststoffgehalt im Bereich von 0,01 Gew.-% bis 10 Gew.-%, vorzugsweise 0,1 Gew.-% bis 5 Gew.-%, bezogen auf das Gesamtgewicht der Suspension aufweist.

13. Verfahren nach einem der vorangegangenen Ansprüche, **dadurch gekennzeichnet, dass** das Abtrennen ungelöster Feststoffe in Stufe c) mittels Filtration, Sedimentation oder Zentrifugation durchgeführt wird.

## Claims

1. Process for obtaining phosphate from raw material containing valuable materials, the raw material being selected from the group consisting of sewage sludge, sewage sludge ash, sewage sludge slag, fermentation residues, residues from the fermentation of biomass, farm manure, liquid manure, animal fat, animal meal, animal meal ash, meat bone meal, organic waste, garden waste, Bonder sludge, phosphate-containing technical waste solutions, phosphate-containing sewage, byproducts of food production, including casein, cheese dust, meat and fish waste and press cakes remaining in the production of edible oil, and mixtures thereof, by extraction, in which one
(a) provides the raw material containing valuable materials in the form of a suspension or provides a suspension of the raw material containing valuable materials in a suspending agent selected from the group consisting of water, alcohol, water/alcohol mixture or aqueous solution,
(b) introduces extractant into the suspension from step a), the extractant being a combination of carbon dioxide (CO₂) and sulfur dioxide (SO₂), different compounds of the extractant being introduced into the suspension simultaneously or one after the other until the pH of the suspension being reached is less than or equal to 3.5,
(c) separates undissolved solids from the suspension, whereby a liquid is obtained, and
(d) precipitates phosphates, dissolved therein, from the liquid obtained in step c) and separates them from the liquid.

2. The method according to claim 1, **characterized in that** the weight fraction of the CO₂ which is introduced as part of the extractant in stage b), is 0.0001 wt.-% to 10 wt.-% based on the total weight of the suspension in stage a).

3. The method according to any one of the preceding claims, **characterized in that** the extractant or, with successive introduction of the components of the extractant, at least one component of the extractant is introduced into the aqueous suspension of the raw material containing valuable materials, and thereby creating an excess pressure of 0.1 to 200 bar, preferably from 1 to 100 bar, particularly preferably from 5 to 20 bar, based on the ambient pressure.

4. The method according to claim 3, **characterized in that** at least the extractant, which contains CO₂, is introduced into the aqueous suspension of the raw material containing valuable substances, and thereby creating an excess pressure of 0.1 to 200 bar, preferably 1 to 100 bar, particularly preferably from 5 to 20 bar, based on the ambient pressure.

5. The method according to claim 3 or 4, **characterized in that** after step b) and before step c) the pressure is lowered in an intermediate step and/or after step c), the extractant introduced in step b) is at least partially expelled from the suspension in the form of gas(es).

6. The method according to any one of the preceding claims, **characterized in that** in step d) phosphates are precipitated by (i) reducing the pressure and/or (ii) adding an alkaline component and/or (iii) increasing the temperature and/or (iv) treating the liquid from step c) with mechanical gas extraction aids, ultrasound and/or microwaves, in particular by stirring, whereby the extractant introduced in step b) is at least partially expelled from the liquid in the form of gas(es).

7. The method according to claim 6, **characterized in that** the alkaline component is an aqueous suspension of Ca(OH)₂.

8. The method according to any one of claims 5, 6 or 7, **characterized in that** the extractant expelled in the form of gas(es) is collected and reintroduced in a method according to one of the preceding claims in step b) as an extractant or component of an extractant.

9. The method according to any one of the preceding claims, **characterized in that** the suspension has, when the extractant is introduced, a temperature in the range from -20 to +200 °C, preferably from 0 to +100 °C, particularly preferably from 10 to +50 °C.

10. The method according to any one of the preceding claims, **characterized in that** the suspending agent contains one or more alcohols in an amount of 0.1 to 50 wt.-%, preferably 1 to 10 wt.-%, particularly preferably 1 to 5 wt.-%, based on the amount of liquid suspending agent, the one or more alcohols preferably being selected from methanol, ethanol and isopropanol.

11. The method according to any one of the preceding claims, **characterized in that** the suspension contains the raw material containing valuable materials in an amount of 0.01 to 10 wt.-%, based on the suspension.

12. The method according to any one of the preceding claims, **characterized in that** the suspension provided in step a) has a solids content in the range from 0.01 wt.-% to 10 wt.-%, preferably 0.1 wt.-% to 5 wt.-%, based on the total weight of the suspension.

13. The method according to any one of the preceding claims, **characterized in that** the separation of undissolved solids in step c) is carried out by means of filtration, sedimentation or centrifugation.

## Revendications

1. Procédé d'obtention de phosphate à partir de matière première valorisable, choisie dans le groupe constitué de boue de clarification, de cendres de boue de clarification, de scories de boue de clarification, de digestats, de résidus de fermentation de la biomasse, d'effluents d'élevage, de fumier, de graisse animale, de farine animale, de cendres de farine animale, de farines de viande et d'os, de déchets biologiques, de déchets de jardinage, de boues de soudage, de solutions de déchets techniques contenant du phosphate, d'eaux usées contenant du phosphate, de sous-produits de la production alimentaire, y compris caséine, lait caillé, déchets de viande et de poisson, et gâteau de filtre-presse restant lors de la fabrication d'huile de table, et des mélanges de ceux-ci, par extraction, où l'on
(a) fournit la matière première valorisable sous la forme d'une suspension ou fournit une suspension de la matière première valorisable dans un agent de suspension, choisi dans le groupe constitué de l'eau, de l'alcool, d'un mélange eau/alcool ou d'une solution aqueuse,
(b) introduit un agent d'extraction dans la suspension de l'étape a), l'agent d'extraction étant une combinaison de dioxyde de carbone (CO₂) et de dioxyde de soufre (SO₂), les différents composés de l'agent d'extraction étant introduits simultanément ou successivement dans la suspension jusqu'à ce que le pH de la suspension soit inférieur ou égal à 3,5,
(c) sépare les matières solides non dissoutes de la suspension, un liquide étant obtenu, et
(d) précipite hors du liquide obtenu à l'étape c) les phosphates dissous dans celui-ci et les sépare du liquide.

2. Procédé selon la revendication 1, **caractérisé en ce que** la proportion en poids du CO₂ qui est introduit comme composant de l'agent d'extraction à l'étape b), est de 0,0001 % en poids à 10 % en poids par rapport au poids total de la suspension à l'étape a).

3. Procédé selon l'une des revendications précédentes, **caractérisé en ce que** l'on introduit l'agent d'extraction, ou, en cas d'introduction successive des composants de l'agent d'extraction, au moins un composant de l'agent d'extraction dans la suspension aqueuse de la matière première valorisable, et ainsi que l'on produit une surpression de 0,1 à 200 bar, de préférence de 1 à 100 bar, de manière particulièrement préférée de 5 à 20 bar, par rapport à la pression environnante.

4. Procédé selon la revendication 3, **caractérisé en ce que** l'on introduit au moins l'agent d'extraction qui contient le CO₂ dans la suspension aqueuse de la matière première valorisable, et ainsi que l'on produit une surpression de 0,1 à 200 bar, de préférence de 1 à 100 bar, de manière particulièrement préférée de 5 à 20 bar, par rapport à la pression environnante.

5. Procédé selon la revendication 3 ou 4, **caractérisé en ce que** l'on diminue la pression après l'étape b) et avant l'étape c) au cours d'une étape intermédiaire et/ou après l'étape c), l'agent d'extraction introduit à l'étape b) étant extrait au moins partiellement sous forme de gaz hors de la suspension.

6. Procédé selon l'une des revendications précédentes, **caractérisé en ce que** l'on précipite des phosphates à l'étape d), en (i) réduisant la pression et/ou (ii) ajoutant un composant alcalin et/ou (iii) augmentant la température et/ou (iv) traitant le liquide de l'étape c) avec des auxiliaires d'extraction de gaz mécaniques, des ultrasons et/ou des micro-ondes, en particulier par agitation, l'agent d'extraction introduit à l'étape b) étant au moins partiellement extrait sous forme de gaz hors du liquide.

7. Procédé selon la revendication 6, **caractérisé en ce que** le composant alcalin est une suspension aqueuse de Ca(OH)₂.

8. Procédé selon l'une des revendications 5, 6 ou 7, **caractérisé en ce que** l'agent d'extraction extrait sous forme de gaz est capté et de nouveau introduit à l'étape b) dans un procédé selon l'une des revendications précédentes en tant qu'agent d'extraction ou composant d'un agent d'extraction.

9. Procédé selon l'une des revendications précédentes, **caractérisé en ce que** la suspension présente, lors de l'introduction de l'agent d'extraction, une température dans la plage de -20 à +200 °C, de préférence de 0 à +100 °C, de manière particulièrement préférée de 10 à +50 °C.

10. Procédé selon l'une des revendications précédentes, **caractérisé en ce que** l'agent de suspension contient un ou plusieurs alcools en une quantité de 0,1 à 50 % en poids, de préférence 1 à 10 % en poids, de manière particulièrement préférée de 1 à 5 % en poids, par rapport à la quantité d'agent de suspension liquide, les un ou plusieurs alcools étant choisis de préférence parmi le méthanol, l'éthanol et l'isopropanol.

11. Procédé selon l'une des revendications précédentes, **caractérisé en ce que** la suspension contient la matière première valorisable en une quantité de 0,01 à 10 % en poids, par rapport à la suspension.

12. Procédé selon l'une des revendications précédentes, **caractérisé en ce que** la suspension fournie à l'étape a) présente une teneur en matières solides dans la plage de 0,01 % en poids à 10 % en poids, de préférence 0,1 % en poids à 5 % en poids par rapport au poids total de la suspension.

13. Procédé selon l'une des revendications précédentes, **caractérisé en ce que** la séparation des matières solides non dissoutes à l'étape c) est effectuée par filtration, sédimentation ou centrifugation.
